# EUROPEAN PATENT APPLICATION

(11) **EP 3 518 358 A1**
(43) Date of publication of application: **31.07.2019**
(21) Application number: 17852611.7
(22) Date of filing: 09.05.2017
(51) Int. Cl.: H02B 1/28

(54) **SWITCHGEAR**

(30) Priority: 26.09.2016 JP 2016186719
(71) Applicant: Hitachi Industrial Equipment Systems Co., Ltd., Tokyo 101-0022 (JP)
(72) Inventor: WATANABE, Naoya, Tokyo 101-0022 (JP); KATOU, Takashi, Tokyo 101-0022 (JP); HONMA,Masahiro, Tokyo 101-0022 (JP); HORII, Chihiro, Tokyo 101-0022 (JP); KIYAMA, Kazuharu, Tokyo 101-0022 (JP); PANG, Jun Hoe, Tokyo 101-0022 (JP); MAKIYAMA, Fumio, Tokyo 101-0022 (JP)
(74) Representative: MERH-IP Matias Erny Reichl Hoffmann Patentanwälte PartG mbB
(86) International application number: PCT/JP2017/017586
(87) International publication number: WO 2018/055830

(57) **Abstract**

The present invention provides a switchgear which is adapted not only to discharge a hot gas generated in a lower switching device compartment to the outside although an upper switching device and the lower switching device are not displaced from each other, but also to eliminate a problem that the switchgear expands laterally or entails the increase in device size when the switching devices are arranged in plural stages. According to the present invention for achieving the above object, the switchgear includes: a plurality of switching device compartments vertically stacked on top of each other in a housing and respectively accommodating a switching device therein; a cable compartment disposed on a rear side from the switching device compartment and accommodating therein a cable electrically connected to the switching device; a bus-bar compartment disposed on the rear side from the switching device compartment as adjoining the cable compartment, and accommodating therein a bus bar electrically connected to the switching device; and an arc duct spanning the switching device compartment and the cable compartment of the housing, and an uppermost part of the bus-bar compartment in a depth direction thereof. The switchgear is characterized by further including a first exhaust passage which is vertically extended from at least one of lateral side walls, with respect to a depth direction, of the lowermost one of the plural switching device compartments to the arc duct as located between the side walls of the switching device compartments and a side wall of the housing and spanning the plural switching device compartments.

## Description

### Technical Field

The present invention relates to a switchgear or more particularly, to a switchgear suited to one equipped with a pressure discharge structure for releasing, to the outside, a high-temperature, high-pressure gas (hot gas) thermally expanded due to an internal arc accident.

### Background Art

A conventional switchgear equipped with the pressure discharge structure for discharging, to the outside, the high-temperature, high-pressure gas (hot gas) thermally expanded due to the internal arc accident is disclosed in Patent Document 1, for example.

Patent Document 1 sets forth the following structure designed to suppress the increase of internal pressure in the event of a short circuit accident in a compartment. A bus bar is disposed at the center of a housing. A breaker and a cable which constitute a branch circuit as branched from the bus bar are disposed on an upper stage and a lower stage as laterally displaced from each other. A space defined between a side wall of upper breaker compartment and upper cable compartment which accommodate the upper devices and a side wall of the housing constitutes a passage to a ceiling of a housing of a bus-bar compartment, a lower breaker compartment and a lower cable compartment which accommodate lower devices. The bas-bar compartment and all the device compartments individually include an aperture as directly connected to the ceiling of the housing and are each provided with a bursting plate at the aperture thereof.

### Citation List

### Patent Document

Patent Document 1: Japanese Patent Application Laid-Open No. 2012-196044

### Summary of the Invention

### Technical Problem

According to the technique disclosed in Patent Document 1, however, the breakers in the upper breaker compartment and the lower breaker compartment are laterally displaced from each other in order that the space defined between the side wall of the upper breaker compartment and the side wall of the housing constitutes the passage to the ceiling of the housing of the lower breaker compartment. Therefore, there has been the problem that, if the breakers are arranged in plural stages (three stages or more), passages to the ceiling of the housing of a bottom stage breaker compartment and a second lowest stage breaker compartment are added so that the switchgear is expanded laterally, resulting in the increase in device size.

The present invention has been accomplished in view of the above and has an object to provide a switchgear which is, needless to say, adapted to discharge the hot gas generated in a lower switching device compartment to the outside although an upper switching device and a lower switching device are not displaced from each other and which is also adapted to ensure that the switchgear is not laterally expanded nor entails the increase of device size if the switching devices are arranged in plural stages. Solution to Problem

According to an aspect of the present invention for achieving the above object, a switchgear includes: a housing; a plurality of switching device compartments vertically stacked on top of each other in the housing and respectively accommodating a switching device therein; a cable compartment disposed on a rear side from the switching device compartment and accommodating therein a cable electrically connected to the switching device; a bus-bar compartment disposed on the rear side from the switching device compartment as adjoining the cable compartment, and accommodating therein a bus bar electrically connected to the switching device; and an arc duct spanning the switching device compartment and the cable compartment of the housing, and an uppermost part of the bus-bar compartment in a depth direction thereof, and is characterized by including a first exhaust passage which is vertically extended from at least one of lateral side walls, with respect to a depth direction, of the lowermost one of the plural switching device compartments to the arc duct as located between the side walls of the switching device compartments and a side wall of the housing, and spanning the plural switching device compartments.

### Advantageous Effects of the Invention

According to the present invention, it can be provided the switchgear which is, needless to say, adapted to discharge the hot gas generated in the lower breaker compartment to the outside although the upper breaker and the lower breaker are not displaced from each other and which is also adapted to ensure that the switchgear is not laterally expanded nor entails the increase of device size if the breakers are arranged in plural stages.

### Brief Description of Drawings

Figure 1 is a perspective view of an overall structure of a switchgear according to Embodiment 1 hereof, showing a disassembled state of the switchgear with an arc duct broken away.
Figure 2 is a sectional view taken on the line C-C in Figure 1.
Figure 3 is a sectional view taken on the line D-D in Figure 1.
Figure 4 is a sectional view taken on the line A-A in Figure 2.
Figure 5 is a sectional view taken on the line B-B in Figure 2.
Figure 6 is a diagram showing a breaker employed by the switchgear according to Embodiment 1 hereof. Description of Embodiments

A switchgear according to the present invention will hereinbelow be described with reference to an illustrated embodiment hereof. Throughout the figures illustrating the embodiment, equal or similar reference numerals are assigned to equal or similar components.

### <Embodiment 1>

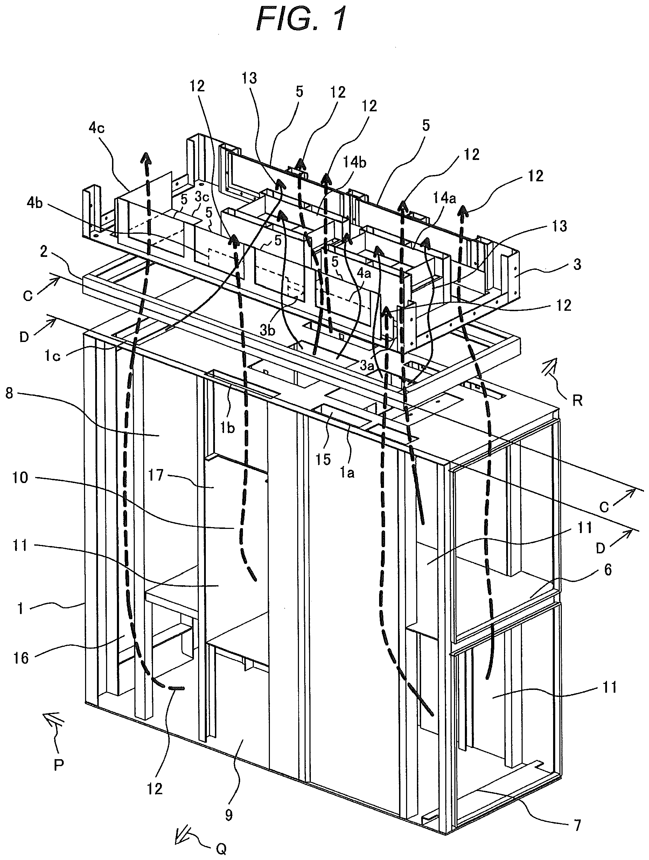

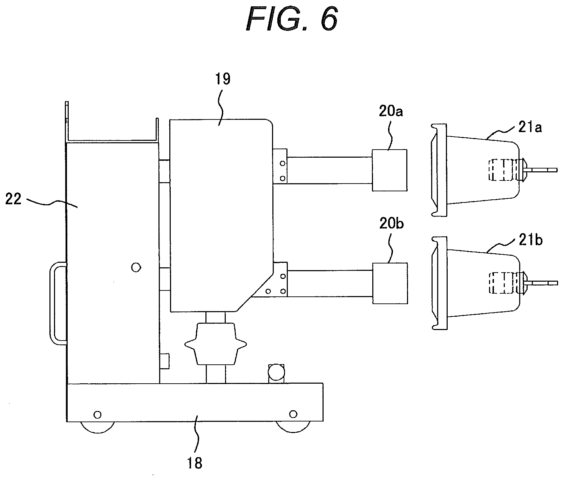

Figure 1 is a perspective view of an overall structure of a switchgear according to Embodiment 1 hereof, showing a disassembled state of the switchgear with an arc duct broken away. Figure 6 is a diagram showing a schematic configuration of a breaker employed by the switchgear according to the present embodiment hereof. While the present embodiment employs the breaker as an example of a switching device, the present invention is also applicable to a disconnector.

As shown in Figure 1 and Figure 6, the switchgear of the present embodiment essentially includes: a housing 1; a plurality of vertically stacked (stacked in two layers in this example) breaker compartments, or an upper breaker compartment 6 and a lower breaker compartment 7, which are disposed in this housing 1 and each accommodate therein a vacuum circuit breaker 19 as a breaker that is responsible for current conduction and current cutoff and is located at the same position as carried on a carriage 18 (see Figure 6); a bus-bar compartment 10 which is disposed on a rear side from the upper breaker compartment 6 and lower breaker compartment 7 and accommodates therein a bus bar (not shown) connected to disconnection terminals 20a, 20b of the vacuum circuit breaker 19 via disconnection bushings 21a, 21b; an upper cable compartment 8 and a lower cable compartment 9 which are disposed on a rear side from the bus-bar compartment 10 and each accommodate therein a cable (not shown) connected via a connection terminal; and an arc duct 3 which spans the upper breaker compartment 6 and the lower breaker compartment 7; the upper cable compartment 8 and the lower cable compartment 9; and an uppermost part of the bus-bar compartment 10 in a depth direction thereof and which is responsible for processing and discharging a hot gas 12 generated by arcs.

As shown in Figure 6, the above-described vacuum circuit breaker 19 is operably switched on and off by means of a solenoid operation device 22 such that the disconnection terminals 20a, 20b are connected to the bus bar in the bus-bar compartment 10 by means of the disconnection bushings 21a, 21b (Figure 6 shows a state where the disconnection terminals 20a, 20b are unconnected with the disconnection bushings 21a, 21b). While the present embodiment is described by way of an example where the vacuum circuit breaker is employed, the present invention is of course applicable to switchgears employing breakers using air or gas or a disconnector.

Although not specifically illustrated, each of the above-described upper breaker compartment 6, lower breaker compartment 7, upper cable compartment 8, lower cable compartment 9 and bus-bar compartment 10 is isolated by partition walls.

The above-described arc duct 3 is disposed on an upper part of the housing 1 via a base 2. The upper part of the housing 1 and the arc duct 3 are each provided with a plurality of apertures 1a, 1b, 1c, 3a, 3b, 3c such that the hot gas 12 generated by the arcs is guided from an arc route 11 into the arc duct 3 via the apertures 1a, 1b, 1c of the housing 1 and the apertures 3a, 3b, 3c of the arc duct 3. The hot gas 12 guided into the arc duct 3 is discharged to the outside via a filter 5 to be described hereinlater.

The arc duct 3 is centrally provided with two rectangular air vents 14a, 14b for discharging to the outside a cooling air 13 having cooled the interior of the device.

The arc duct 3 is provided with a plurality of filters 5 made of a sintered metal which absorb the hot gas 12 while reducing an internal pressure. The arc duct is further provided with flappers 4a, 4b, 4c at the apertures thereof 3a, 3b, 3c such as to open and close these apertures 3a, 3b, 3c.

The switchgear of the present embodiment includes a first exhaust passage 15 which extends vertically from side walls in Q direction and R direction (lateral side walls) with respect to P direction (depth direction), as seen in Figure 1, of the lower breaker compartment 7 as the lowermost stage. The first exhaust passage 15 spans the upper breaker compartment 6 and lower breaker compartment 7 as defined between the side walls of the upper breaker compartment 6 and lower breaker compartment 7 and the side wall of the housing 1, thus guiding the hot gas 12 into the arc duct 3. The switchgear of the present embodiment further includes a second exhaust passage 16 which extends vertically from a side wall of the lower cable compartment 9 to the arc duct 3, as defined between side walls of the upper cable compartment 8 and lower cable compartment 9 and the side wall of the housing 1 so as to guide the hot gas 12 into the arc duct 3. The switchgear of the present embodiment further includes a third exhaust passage 17 which extends vertically from a side wall of the bus-bar compartment 10 as defined between the sidewall of the bus-bar compartment 10 and the side wall of the housing 1 so as to guide the hot gas 12 into the arc duct 3.

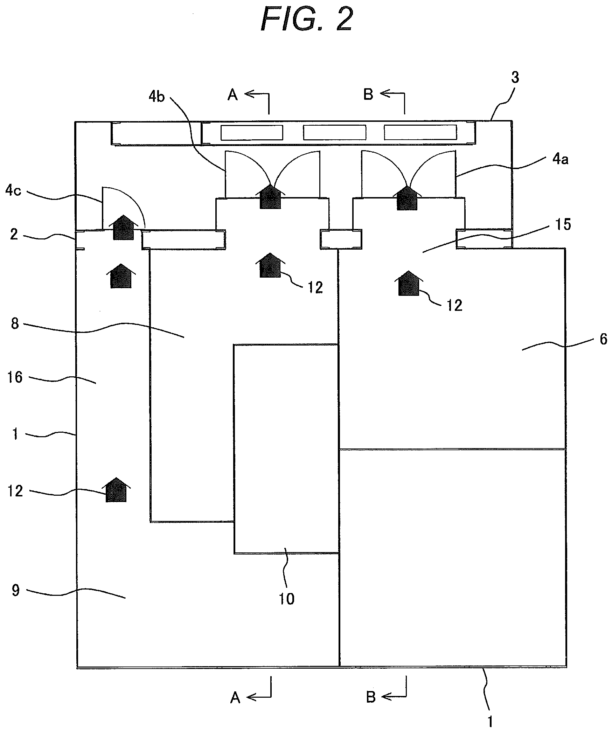

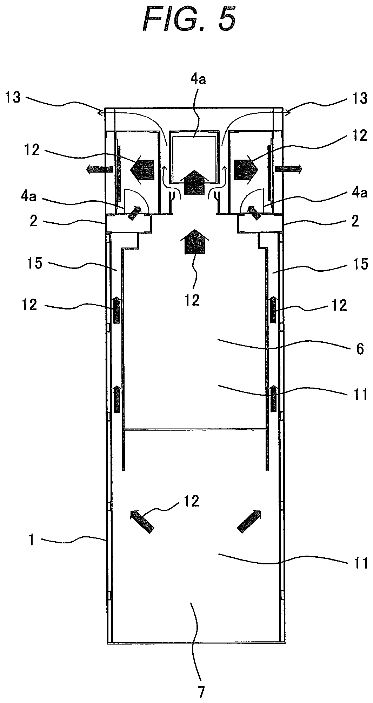

Next, a flow of the hot gas 12 in the switchgear of the present embodiment having such a configuration is described with reference to Figure 2 to Figure 5.

In the event of an internal arc accident in the upper breaker compartment 6, for example, the hot gas 12 resulting from the arc accident is guided into the arc duct 3 through the aperture formed at an upper part of the upper breaker compartment 6. The hot gas 12 guided into the arc duct 3 is discharged to the outside via the plural filters 5 made of the sintered metal. In this process, the hot gas passes through the sintered metal forming the filters 5 so as to allow particles in the hot gas 12 to adhere to the sintered metal while the temperature of the gas is lowered. Thus, the pressure can be discharged to the outside.

In the event of an internal arc accident in the lower breaker compartment, on the other hand, the hot gas 12 resulting from the arc accident is guided from the lower breaker compartment 7 through the first exhaust passage 15 into the arc duct 3 via the aperture 1a of the housing 1 and the aperture 3a of the arc duct 3 (at this time, the flapper 4a is in an open state). The hot gas 12 guided into the arc duct 3 is discharged to the outside through the plural filters 5 made of the sintered metal. In this process, the hot gas passes through the sintered metal forming the filters 5 so as to allow the particles in the hot gas 12 to adhere to the sintered metal while the temperature of the gas is lowered. Thus, the pressure can be discharged to the outside.

The greater the number of the pressure discharge passages, the faster is the temperature fall of the hot gas. In this connection, the example illustrates the example where the pressure discharge passages are disposed on both sides of the compartments. According to the concept of the present invention, however, the pressure discharge passage can be disposed on only one side of the compartments. One of the features of the present invention consists in that if the hot gas is generated by the arcs in any one of the breaker compartments (or switching device compartments) arranged in vertically stacked layers, the hot gas is prevented from affecting the other compartment(s) by providing the arc duct on at least one side of the breaker compartments vertically stacked on top of each other, the arc duct spanning both the upper and lower breaker compartments.

The upper cable compartment 8 and the lower cable compartment 9 involve a potential fear of occurrence of short circuit fault caused by a misplaced tool (metals) or the like. Otherwise, the bus-bar compartment 10 involves a potential fear of occurrence of short circuit fault of the bus bar. In the event of any one of these short circuit faults, the hot gas 12 may be generated.

When the hot gas 12 is generated in the upper cable compartment 8, the hot gas 12 is guided into the arc duct 3 through an aperture formed in an upper part of the upper cable compartment 8. The hot gas 12 guided into the arc duct 3 is discharged to the outside through the plural filters 5 made of the sintered metal. In this process, the hot gas 12 passes through the sintered metal forming the filters 5 so as to allow the particles in the hot gas 12 to adhere to the sintered metal while the temperature of the gas is lowered. Thus, the pressure can be discharged to the outside.

When the hot gas 12 is generated in the lower cable compartment, on the other hand, the hot gas 12 is guided into the arc duct 3 through the aperture 3c thereof by flowing through the second exhaust passage 16 to pass through the aperture 1c of the housing 1 and an aperture formed at the base 2, as shown in Figure 2. At this time, the flapper 4c is in an open state. The hot gas 12 guided into the arc duct 3 is discharged to the outside through the plural filters 5 made of the sintered metal. In this process, the hot gas 12 passes through the sintered metal forming the filters 5 so as to allow the particles in the hot gas 12 to adhere to the sintered metal while the temperature of the gas is lowered. Thus, the pressure can be discharged to the outside. An aperture formed in the base 2 on a bottom side thereof adjoining the housing 1 and an aperture formed in the base 2 on a top side thereof adjoining the arc duct 3 do not completely coincide with each other. The aperture on the top side is shifted inward from the other as seen from above. This is because the aperture in the arc duct 3 must be shifted inward by the thickness of a bolt used for fixing the filter 5 to the arc duct 3.

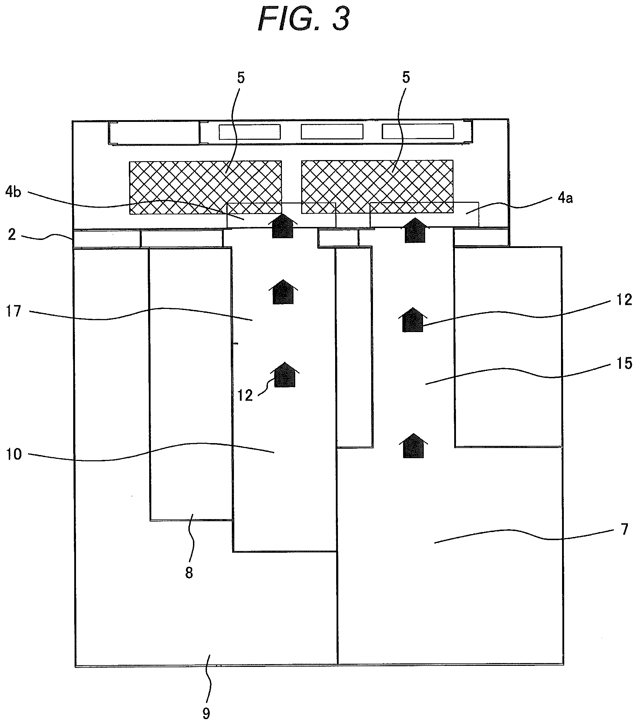

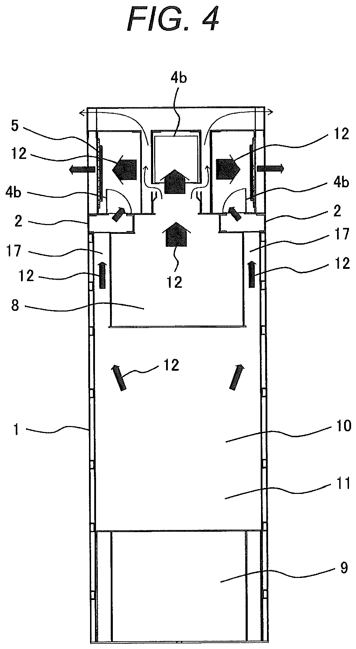

When the hot gas 12 is generated in the bus-bar compartment 10, the hot gas 12 is guided into the arc duct 3 by flowing through the third exhaust passage 17 to pass through the aperture 1b of the housing 1 and through the aperture 3b of the arc duct 3, as shown in Figure 3 and Figure 4. At this time, the flapper 4c is in an open state. The hot gas 12 guided into the arc duct 3 is discharged to the outside through the plural filters 5 made of the sintered metal. In this process, the hot gas 12 is absorbed by the sintered metal forming the filters 5 so that a clean air is discharged to the outside.

By adopting such a configuration of the present embodiment, the switchgear is, needless to say, adapted to guide the hot gas 12 resulting from the internal arc accident into the arc duct 3 through the first exhaust passage 15, the second exhaust passage 16, or the third exhaust passage 17 and to discharge the hot gas to the outside. Furthermore, if the breakers are provided in plural stages, the switchgear is not expanded laterally nor entails the increase of device size.

The upper breaker and the lower breaker are not laterally displaced from each other. Further, the central axes of the upper breaker and lower breaker are not laterally displaced from each other so that the gravity centers thereof are not displaced from each other. If an explosion occurs in association with the internal arc accident, for example, there is no fear that the breaker is disconnected due to the vibrations generated by the explosion, resulting in arc occurrence.

Accordingly, the present embodiment is adapted not only to discharge the hot gas generated in the lower breaker compartment to the outside although the upper breaker and lower breaker are not displaced from each other, but also to eliminate the problem that the switchgear having the breakers arranged in in plural stages is expanded laterally, entailing the increase of device size. Further, the present embodiment eliminates the fear of the disconnection of the breakers due to the vibrations associated with the explosion in the event of the internal arc accident. Thus, the present embodiment can provide the highly safe switchgear free from the fear of the arc occurrence.

It is noted that the present invention is not limited to the above-described embodiment but can include a variety of modifications. The above-described embodiment, for example, is the detailed illustrations to clarify the present invention. The present invention is not necessarily limited to those including all the components described above. Some component of one embodiment can be replaced by some component of another embodiment. Further, some component of one embodiment can be added to the arrangement of another embodiment. A part of the arrangement of each embodiment permits addition of some component of another embodiment, the omission thereof or replacement thereof.

### Reference Signs List

- 1: housing
- 1a, 1b, 1c: aperture of housing
- 2: base,
- 3: arc duct
- 3a, 3b, 3c: aperture of arc duct
- 4a, 4b, 4c: flapper
- 5: filter
- 6: upper breaker compartment
- 7: lower breaker compartment
- 8: upper cable compartment
- 9: lower cable compartment
- 10: bus-bar compartment
- 11: arc route
- 12: hot gas
- 13: cooling air
- 14a, 14b: air vent
- 15: first exhaust passage
- 16: second exhaust passage
- 17: third exhaust passage
- 18: carriage
- 19: vacuum circuit breaker
- 20a, 20b: disconnection terminal
- 21a, 21b: disconnection bushing
- 22: solenoid operation device

## Claims

1. A switchgear comprising:
a housing;
a plurality of switching device compartments vertically stacked on top of each other in the housing and respectively accommodating a switching device therein;
a cable compartment disposed on a rear side from the switching device compartment and accommodating therein a cable electrically connected to the switching device;
a bus-bar compartment disposed on the rear side from the switching device compartment as adjoining the cable compartment, and accommodating therein a bus bar electrically connected to the switching device; and
an arc duct spanning the switching device compartment and the cable compartment of the housing, and an uppermost part of the bus-bar compartment in a depth direction thereof,
the switchgear comprising a first exhaust passage which is vertically extended from at least one of lateral side walls, with respect to a depth direction, of the lowermost one of the plural switching device compartments to the arc duct as located between the side walls of the switching device compartments and a side wall of the housing and spanning the plural switching device compartments.

2. The switchgear according to Claim 1,
wherein the first exhaust passage is extended from both of the lateral side walls of the switching device compartment to the arc duct as located between the vertical side walls of the switching device compartments and the side walls of the housing.

3. The switchgear according to Claim 1 or 2,
wherein the uppermost one of the plural switching device compartments includes an aperture formed in a ceiling thereof and leading into the arc duct.

4. The switchgear according to any one of Claims 1 to 3,
wherein the cable compartment includes an upper cable compartment and a lower cable compartment, and is provided with a second exhaust passage vertically extended from a side wall of the lower cable compartment to the arc duct as located between side walls of the upper cable compartment and the lower cable compartment and the side wall of the housing.

5. The switchgear according to Claim 4,
wherein the upper one of the plural cable compartments includes an aperture formed in a ceiling thereof and leading into the arc duct.

6. The switchgear according to Claim 5, further comprising a third exhaust passage vertically extended from a side wall of the bus-bar compartment to the arc duct as located between the side wall of the bus-bar compartment and the side wall of the housing.

7. The switchgear according to Claim 1 or Claim 2,
wherein the arc duct is disposed on an upper part of the housing via a base; the upper part of the housing, the base and the arc duct are each provided with a plurality of apertures; and the first exhaust passage is connected to the arc duct via the plural apertures.

8. The switchgear according to Claim 4,
wherein the arc duct is disposed on an upper part of the housing via a base; the upper part of the housing, the base and the arc duct are each provided with a plurality of apertures; and the first exhaust passage, the first exhaust passage and the second exhaust passage, or the first exhaust passage is connected to the arc duct via the plural apertures.

9. The switchgear according to Claim 6,
wherein the arc duct is disposed on an upper part of the housing via a base; the upper part of the housing, the base and the arc duct are each provided with a plurality of apertures; and the first exhaust passage, the first exhaust passage and the second exhaust passage, or the first exhaust passage, the second exhaust passage and the third exhaust passage are connected to the arc duct via the plural apertures.

10. The switchgear according to any one of Claims 7 to 9,
wherein the apertures of the arc duct are provided with flappers for opening and closing the apertures.

11. The switchgear according to any one of Claims 1 to 10,
wherein the arc duct is provided with a filter made of a sintered metal which absorbs a hot gas.
